(19) Europäisches Patentamt
European Patent Office
Office européen des brevets

(11) **EP 4 148 459 B1**

(12) **EUROPEAN PATENT SPECIFICATION**

(45) Date of publication and mention
of the grant of the patent:
**20.03.2024   Bulletin 2024/12**

(21) Application number: **21196466.3**

(22) Date of filing: **14.09.2021**

(51) International Patent Classification (IPC):
*G01S 7/4863* (2020.01)     *G01S 7/487* (2006.01)
*G01S 7/497* (2006.01)       *G01S 17/10* (2020.01)
*G01S 17/42* (2006.01)       *G01S 17/894* (2020.01)

(52) Cooperative Patent Classification (CPC):
**G01S 7/4863; G01S 7/487; G01S 7/497;
G01S 17/10; G01S 17/42; G01S 17/894**

(54) **TIME-OF-FLIGHT SENSORS AND ELECTRONIC DEVICE**

LAUFZEITSENSOREN UND ELEKTRONISCHE VORRICHTUNG

CAPTEURS DE TEMPS DE VOL ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.03.2023   Bulletin 2023/11**

(73) Proprietor: **Infineon Technologies AG
85579 Neubiberg (DE)**

(72) Inventors:
• **SCHICKBICHLER, Wolfgang
8605 Kapfenberg (AT)**

• **LOBNIK, Robert
9135 Bad Eisenkappel (AT)**
• **PLANK, Hannes
8010 Graz (AT)**

(74) Representative: **2SPL Patentanwälte PartG mbB
Landaubogen 3
81373 München (DE)**

(56) References cited:
**EP-A1- 3 392 674     US-A1- 2012 194 799**

## Description

### Field

The present disclosure relates to Time-of-Flight (ToF) sensing. In particular, examples relate to ToF sensors and an electronic device.

### Background

Document EP 3 392 647 A1 proposes a pixel structure for use in imaging systems for determining a distance to an object. The pixel comprises two charge storage wells, one of which is respectively activated during two subsequent time windows. Further, the pixel comprises a third storage well, which is activated in the absence of emitted light pulses. The charge accumulated in the third well is subtracted from the charges in the two other charge wells to effectively remove background light components from the latter charges. The light received in the third well may also include reflections of projected spots arriving from highly reflective objects outside the range covered by the operation of the first well and the second well, and the accumulated charges may accordingly be used to detect such objects.

Document US 2012/194799 A1 proposes a photo electric conversion element for detecting light and converting light into photoelectrons. A pixel comprising the photo electric conversion element is equipped with plural capacitors, switching elements, reset switches, a charge accumulating element and a charge discharging unit.

Conventional Continuous Wave (CW) ToF sensors have a distance ambiguity problem. Resolving the ambiguity conventionally requires additional power and additional measurements (e.g. another set of four images with a different modulation frequency). These additional measurements are not always necessary as the scene might not contain any objects at longer distances.

Hence, there may be a demand for improved ToF sensing.

### Summary

The demand is satisfied by the subject-matter of the appended claims.

An example relates to a ToF sensor. The ToF sensor comprises a plurality of photo-sensitive sensor pixels each comprising at least two charge storages and a drain terminal. Further, the ToF sensor comprises a common charge storage coupled to the respective drain terminal of at least a first subset of the plurality of photo-sensitive sensor pixels. The first subset comprises two or more of the plurality of photo-sensitive sensor pixels. The common charge storage comprises one or more capacitor or potential well formed in a semiconductor material of the common charge storage. The common charge storage is an element separate from the plurality of photo-sensitive sensor pixels. For at least one of a plurality of first ToF measurements, the photo-sensitive sensor pixels of at least the first subset are configured to, via the respective drain terminal, drain part of charge carriers generated in the respective photo-sensitive sensor pixel during the at least one of the plurality of first ToF measurements by incident light caused by one or more object outside a target measurement range of the ToF sensor. Further, for the at least one of the plurality of first ToF measurements, the photo-sensitive sensor pixels of at least the first subset are configured to selectively store another part of the charge carriers in the at least two charge storages of the respective photo-sensitive sensor pixel. The common charge storage is configured to accumulate electrical energy conveyed by currents output by the coupled drain terminals and output first data indicative of the accumulated electrical energy.

Another example relates to an electronic device comprising a ToF sensor as described herein and an application processor coupled to the ToF sensor. The ToF sensor further comprises interface circuitry configured to output the first data to the application processor. The application processor is configured to determine based on the first data whether one or more object outside the target measurement range of the ToF sensor is present in a scene.

### Brief description of the Figures

Some examples of apparatuses and/or methods will be described in the following by way of example only, and with reference to the accompanying figures, in which

Fig. 1 illustrates a first example of a ToF sensor;

Fig. 2 illustrates a second example of a ToF sensor;

Fig. 3 illustrates an example of an electronic device;

Fig. 4 illustrates first exemplary correlation functions;

Fig. 5 illustrates exemplary modulation signals;

Fig. 6 illustrates second exemplary correlation functions;

Fig. 7 illustrates third exemplary correlation functions;

Fig. 8 illustrates a flowchart of an example of a method for operating a ToF sensor;

Fig. 9 illustrates a third example of a ToF sensor; and

Fig. 10 illustrates a flowchart of another example of a method for operating a ToF sensor.

**Detailed Description**

Some examples are now described in more detail with reference to the enclosed figures.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

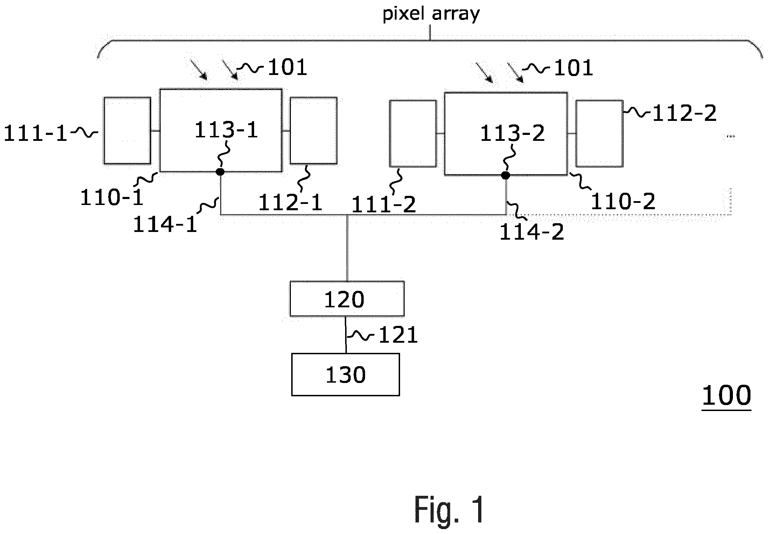

**Fig. 1** illustrates a ToF sensor 100. The ToF sensor 100 comprises a plurality of photo-sensitive sensor pixels 110-1, 110-2, .... Although exactly two photo-sensitive sensor pixels are illustrated in Fig. 1, it is to be noted that the present disclosure is not limited thereto. In general any number $N \geq 2$ of photo-sensitive sensor pixels may be used.

Each photo-sensitive sensor pixel comprises a semiconductor material/substrate (e.g. silicon). Incident light 101 penetrates the semiconductor material of the respective photo-sensitive sensor pixel and causes generation of charge carriers (e.g. electrons or holes) in the semiconductor material.

Further, each photo-sensitive sensor pixel comprises at least two charge storages such as the charge storages 111-1, 112-1, 111-2 and 112-2 illustrated in Fig. 1 for the two photo-sensitive sensor pixels 110-1 and 110-2. For example, the at least two charge storages may be capacitors or potential wells formed in the semiconductor material of the respective photo-sensitive sensor pixel. It is to be noted that the charge storages 111-1, 112-1, 111-2 and 112-2 are illustrated as separate elements in Fig. 1 for illustrative purposes only. The at least two charge storages are part of the respective pho-

to-sensitive sensor pixel. The at least two charge storages allow to selectively store the generated charge carriers. Although exactly two charge storages are illustrated in Fig. 1 for each photo-sensitive sensor pixel, it is to be noted that the present disclosure is not limited thereto. In general any number $M \geq 2$ of charge storages pixels may be used per photo-sensitive sensor pixel.

Additionally, each photo-sensitive sensor pixel comprises a drain terminal such as the drain terminals 113-1 and 113-2 illustrated in Fig. 1 for the two photo-sensitive sensor pixels 110-1 and 110-2. The drain terminal is a terminal that allows to drain the generated charge carriers from the respective photo-sensitive sensor pixel.

Optionally, each photo-sensitive sensor pixel may comprise one or more further elements such as control gates for controlling the flow of the generated charge carriers inside the photo-sensitive sensor pixel (e.g. two or more modulation gates and/or one or more drain gates) and/or read-out terminals for reading out the at least two charge storages. For example, at least one of the plurality of photo-sensitive sensor pixels may be a Photonic Mixer Device (PMD) or a Charge-Coupled Device (CCD).

The ToF sensor 100 further comprises a common charge storage 120 coupled to the respective drain terminal of all of the plurality of photo-sensitive sensor pixels. In the example of Fig. 1, the common charge storage 120 is accordingly coupled to the drain terminals 113-1 and 113-2 of the two photo-sensitive sensor pixels 110-1 and 110-2. However, it is to be noted that the common charge storage 120 need not be coupled to all of the plurality of photo-sensitive sensor pixels of the ToF sensor 100. Further examples, in which the common charge storage 120 is coupled to only part of the plurality of photo-sensitive sensor pixels of the ToF sensor 100 will be described later. The common charge storage 120 comprises one or more capacitor or potential well formed in a semiconductor material of the common charge storage 120.

The ToF sensor 100 is configured to perform a plurality of first ToF measurements of a scene (e.g. two or more). The ToF sensor may comprise an illumination element (device, circuitry) configured to illuminate the scene with modulated light for a respective one of the plurality of first ToF measurements. The illumination element is not illustrated in Fig. 1 for reasons of clarity. For example, the illumination element may be configured to emit modulated light pulses (i.e. modulated light) to the scene. The incident light 101 includes reflections of the emitted modulated light (e.g. emitted light pulses) by one or more object in the scene. The illumination element may comprise any number of light sources. The illumination element may, e.g., comprise one or more Light-Emitting Diodes (LEDs) and/or one or more laser diodes (e.g. one or more Vertical-Cavity Surface-Emitting Lasers, VCSELs) which are fired based on an illumination signal.

The ToF sensor 100 may optionally comprise further components such as, e.g., optics (e.g. one or more lenses) and electronic circuitry (e.g. read-out circuitry or Analog-to-Digital Converter, ADC, circuitry).

At least part of the incident light 101 may be caused by one or more object within a target measurement range of the ToF sensor 100. Further, at least part of the incident light 101 may be caused by one or more object outside the target measurement range of the ToF sensor 100. In other words, at least part of the reflections included in the incident light 101 may be caused by one or more object within the target measurement range and/or at least part of the reflections included in the incident light 101 may be caused by one or more object outside the target measurement range. The target measurement range of the ToF sensor 100 is a distance range in which a respective quantity of one or more object (e.g. a respective distance to the one or more object) is to be measured by the ToF sensor 100.

For at least one of the plurality of first ToF measurements, the plurality of photo-sensitive sensor pixels 110-1, 110-2, ... are configured to drain part of the charge carriers generated in the respective photo-sensitive sensor pixel during the at least one of the plurality of first ToF measurements via the respective drain terminal 113-1, 113-2, .... In particular, the plurality of photo-sensitive sensor pixels 110-1, 110-2, ... are configured to drain part of the charge carriers generated in the respective photo-sensitive sensor pixel 110-1, 110-2, ... during the at least one of the plurality of first ToF measurements by incident light 101 caused by one or more object outside the target measurement range of the ToF sensor 100. In other words, the plurality of photo-sensitive sensor pixels 110-1, 110-2, ... drain part of the charge carriers generated by reflections received from one or more object outside the target measurement range of the ToF sensor 100. For example, the plurality of photo-sensitive sensor pixels 110-1, 110-2, ... may be configured to drain at least 5 %, 10 %, 15 %, 20 % or 25 % of the charge carriers generated in the respective photo-sensitive sensor pixel 110-1, 110-2, ... during the at least one of the plurality of first ToF measurements by incident light 101 that is caused by one or more object outside the target measurement range of the ToF sensor 100.

Further, for the at least one of the plurality of first ToF measurements, the plurality of photo-sensitive sensor pixels 110-1, 110-2, ... are configured to selectively store another part of the charge carriers (e.g. the charge carriers that are not drained via the respective drain terminal) in the at least two charge storages of the respective photo-sensitive sensor pixel. For example, the photo-sensitive sensor pixel 110-1 selectively stores the other part of the charge carriers in the at least two charge storages 111-1 and 112-1. The output data of the respective photo-sensitive sensor pixel are determined based on the charge levels of the at least two charge storages of the respective photo-sensitive sensor pixel. For example, the output data of the photo-sensitive sensor pixel 110-1 may be based on the difference between the charge levels of the two charge storages 111-1 and 112-1 for the respective first ToF measurement.

The drained charge carriers cause a respective current at the drain terminal of the respective photo-sensitive sensor pixel. For example, the charge carriers drained at the photo-sensitive sensor pixel 110-1 cause a current 114-1 at the drain terminal 113-1, whereas the charge carriers drained at the photo-sensitive sensor pixel 110-2 cause a current 114-2 at the drain terminal 113-2. The common charge storage 120 is configured to accumulate (integrate) the electrical energy conveyed by the currents output by the coupled drain terminals. In the example of Fig. 1, the electrical energy conveyed by the currents 114-1, 114-2, ... is accumulated by the common charge storage 120. The common charge storage 120 is further configured to output first data 121 (e.g. digital or analog data) indicative of the accumulated (integrated) electrical energy, i.e., the electrical energy accumulated (integrated) by the common charge storage 120 based on the currents 114-1, 114-2, ... output by the coupled drain terminals 113-1, 113-2, ....

For the at least one of the plurality of first ToF measurements, the plurality of photo-sensitive sensor pixels 110-1, 110-2, ... are configured to drain, via the respective drain terminal, almost none of the charge carriers generated by incident light 101 originating from inside the measurement range of the ToF sensor 100. For example, less than 5 %, 4 %, 3 %, 2 % or 1 % of the charge carriers generated in the respective photo-sensitive sensor pixel during the at least one of the plurality of first ToF measurements by incident light 101 caused by one or more object inside the measurement range of the ToF sensor 100 may be drained. In some examples, none of the charge carriers generated in the respective photo-sensitive sensor pixel during the at least one of the plurality of first ToF measurements by incident light 101 that is caused by one or more object inside the measurement range are drained. In other words, the charge carriers generated in the respective photo-sensitive sensor pixel by incident light 101 caused by one or more object inside the measurement range of the ToF sensor 100 are substantially not drained. That is, almost exclusively charge carriers generated in the respective photo-sensitive sensor pixel by incident light 101 caused by one or more object outside the measurement range are drained.

Overt time, the plurality of photo-sensitive sensor pixels 110-1, 110-2, ... may, e.g., alternatingly store and drain the charge carriers generated by the incident light 101 during the the at least one of the plurality of first ToF measurements. By alternatingly draining and storing the charge carriers over time and by selecting (adjusting) appropriate durations for the integration period(s) and the drain period(s) during the at least one of the plurality of first ToF measurements, the timing(s) and duration(s) of the drain period(s) during the at least one of a plurality of first ToF measurements may be adjusted such that at least part of the incident light 101 (i.e. reflections) arriving at the ToF sensor 100 from an object outside the target measurement range are drained and that substantially none of the incident light 101 (i.e. reflections) arriving at the ToF sensor 100 from an object within the target measurement range are drained.

The common charge storage 120 is charged based on currents proportional to the amount of drained charge carriers. The drained charge carriers are charge carriers caused substantially exclusively by one or more object outside the target measurement range of the ToF sensor 100. Accordingly, the electrical energy accumulated (integrated) by the common charge storage 120 is indicative of whether one or more object outside the target measurement range of the ToF sensor 110 is present in the sensed scene. Accordingly, the first data 121 may allow to efficiently determine whether any ambiguity is present in the output data of the plurality of photo-sensitive sensor pixels 110-1, 110-2, ... (i.e. the ToF sensor 100) for the at least one of the plurality of first ToF measurements.

It is to be noted that the plurality of photo-sensitive sensor pixels 110-1, 110-2, ... and the common charge storage 120 may optionally be configured to perform the above described behavior for more than one ToF measurement of the plurality of first ToF measurements (e.g. for all of the plurality of first ToF measurements).

The analysis of the first data 121 may be done within the ToF sensor 100 as illustrated in Fig. 1. The ToF sensor 100 further comprises processing circuitry 130 for the analysis. For example, the processing circuitry 130 may be a single dedicated processor, a single shared processor, or a plurality of individual processors, some of which or all of which may be shared, a neuromorphic processor, a digital signal processor (DSP) hardware, an application specific integrated circuit (ASIC) or a field programmable gate array (FPGA). The processing circuitry 130 may optionally be coupled to, e.g., read only memory (ROM) for storing software, random access memory (RAM) and/or non-volatile memory. The processing circuitry 130 is configured to determine, based on the first data 121, whether one or more object outside the target measurement range of the ToF sensor is present in the scene. For example, the processing circuitry 130 may be configured to determine whether one or more object outside the target measurement range of the ToF sensor 100 is present in the scene by comparing the accumulated electrical energy indicated by the first data 121 to a threshold value. Comparing the accumulated electrical energy indicated by the first data 121 to a threshold value may allow to avoid false positive results in case some of the charge carriers generated by incident light 101 caused by one or more object inside the measurement range are drained.

The ToF sensor 100 may react in various ways if it is determined that one or more object outside the target measurement range of the ToF sensor is present in the scene. In the following, some exemplary reactions are described. However, it is to be noted that the present disclosure is not limited thereto. Further, several of the below examples may be combined with each other.

For example, if it is determined that one or more object outside the target measurement range of the ToF sensor 100 is present in the scene, the processing circuitry 130 may be configured to flag distance (depth) data indicating one or more distance (depth of) to one or more object in the scene as potentially ambiguous. The distance data is generated by the processing circuitry 130 based on outputs (output data) of the plurality of photo-sensitive sensor pixels 110-1, 110-2, ... for the plurality of first ToF measurements. Similar to what is described above, the outputs (output data) of the plurality of photo-sensitive sensor pixels 110-1, 110-2, ... for the plurality of first ToF measurements are determined based on the charge levels of the at least two charge storages of the respective photo-sensitive sensor pixel for the plurality of first ToF measurements. Accordingly, circuitry (e.g. an application processor) receiving and processing the distance data may be informed that the distance data is potentially ambiguous. Flagging the distance data may allow to increase an overall fidelity of the ToF sensor 100 as it makes the distance data more predictable.

Alternatively or additionally, if it is determined that one or more object outside the target measurement range of the ToF sensor 100 is present in the scene, the processing circuitry 130 may be configured to control the ToF sensor 100 to perform a plurality of second ToF measurements with a modulation frequency other than that used for the first ToF measurements (e.g. two or more additional ToF measurements with a lower or higher modulation frequency). Further, the processing circuitry 130 may be configured to generate distance data indicating one or more distance to one or more object in the scene based on outputs of the plurality of photo-sensitive sensor pixels 110-1, 110-2, ... for the plurality of first ToF measurements and the plurality of second ToF measurements. In other words, the first (e.g. short-range) ToF measurements with the actively monitored common charge storage (element) 120 may be combined with additional ToF measurements. The resulting distance data may, hence, exhibit an extended measurement range and no ambiguities.

Further alternatively or additionally, if it is determined that one or more object outside the target measurement range of the ToF sensor 100 is present in the scene, the processing circuitry 130 may be configured to control the ToF sensor 100 to perform a plurality of second ToF measurements using a second target measurement range that extends beyond the target measurement range of the ToF sensor 100 for the plurality of first ToF measurements. Further, the processing circuitry 130 may be configured to generate distance data indicating one or more distance to one or more object in the scene based on outputs (output data) of the plurality of photo-sensitive sensor pixels 110-1, 110-2, ... for the plurality of second ToF measurements. For example, the target measurement range of the ToF sensor 100 for the plurality of first ToF measurements may be rather short range. In case, the first data 121 indicate the presence of one or more out-of-range object, additional ToF measurements with longer measurement range are performed. The plurality of second ToF measurements may, e.g., use two different modulation frequencies (e.g. eight images in total) to obtain the extended second target measurement range. In some examples, an exposure time used for the plurality of second ToF measurements may optionally be increased compared to an exposure time used for the plurality of first ToF measurements.

As described above, an exemplary reaction of the ToF sensor 100, which initially uses a limited measurement range, may be to dynamically extend the measurement range based on the content (i.e. the accumulated electrical energy) of the common charge storage 120.

Also for the common charge storage 120, various configurations are possible. In the following, some exemplary configurations are described. However, it is to be noted that the present disclosure is not limited thereto.

For example, the common charge storage 120 may be configured to accumulate the electrical energy conveyed by the currents output by the coupled drain terminals for only one of the plurality of first ToF measurements such that the first data are indicative of the amount of electrical energy accumulated for the one of the plurality of first ToF measurements. Analyzing the accumulated electrical energy of only one ToF measurement may allow for low complexity out-of-range object detection.

In alternative examples, the electrical energy conveyed by the currents output by the coupled drain terminals may be accumulated over multiple first ToF measurements.

For example, the common charge storage 120 may be configured to accumulate the electrical energy conveyed by the currents output by the coupled drain terminals for at least two of the plurality of first ToF measurements (e.g. all first ToF measurements) such that the first data are indicative of the amount of electrical energy accumulated for the at least two of the plurality of first ToF measurements. Presence of one or more out-of-range object may - similar to what is described above - be determined by comparing the amount of current accumulated for the at least two of the plurality of first ToF measurements to a threshold value.

In some examples, the processing circuitry 130 may be configured to determine, based on the amount of electrical energy accumulated for the at least two of the plurality of first ToF measurements, an average accumulated electrical energy for a single one of the at least two of the plurality of first ToF measurements. For example, the processing circuitry 130 may divide the amount of electrical energy indicated by the first data by the number of ToF measurements for which the electrical energy is accumulated. Accordingly, the processing circuitry 130 may be configured to determine whether one or more object outside the target measurement range of the ToF sensor 101 is present in the scene by comparing the determined average accumulated electrical energy to a threshold value.

Accumulating and optionally averaging the electrical energy conveyed by the currents output by the coupled drain terminals of multiple first ToF measurements may allow to reduce noise and, hence, increase a Signal-to-Noise Ratio (SNR) for the out-of-range object detection.

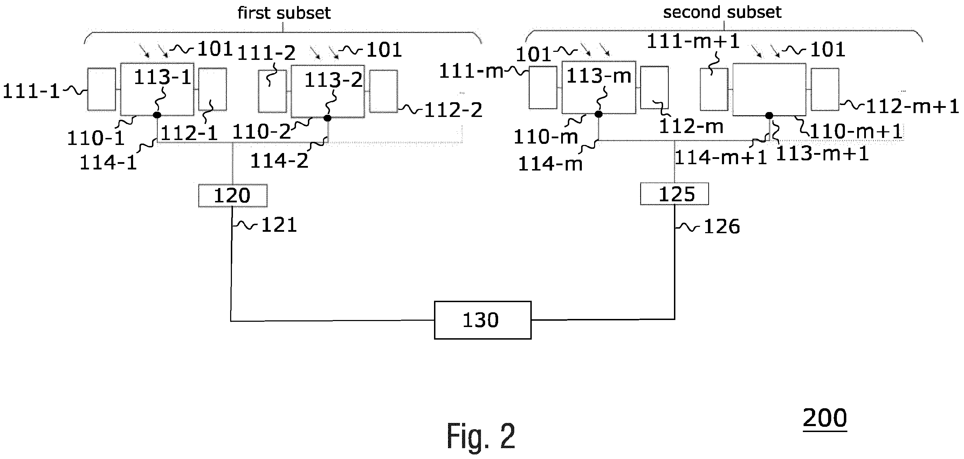

In the example of Fig. 1, the drain terminals of all of the plurality of plurality of photo-sensitive sensor pixels 110-1, 110-2, ... are coupled to the common charge storage 120. However, as indicated above, the present disclosure is not limited thereto. For example, the plurality of photo-sensitive sensor pixels 110-1, 110-2, ... may be grouped to different clusters and each cluster may be provided with its dedicated common charge storage. This is exemplarily illustrated in **Fig. 2** illustrating another ToF sensor 200.

In the example of Fig. 2, the plurality of photo-sensitive sensor pixels are divided into two subsets (cluster). However, it is to be noted that the present disclosure is not limited thereto. In general, any number $K \geq 2$ of subsets may be used.

The first subset comprises the first m-1 photo-sensitive sensor pixels 110-1, 110-2, ... of the plurality of photo-sensitive sensor pixels, whereas to the second subset comprises the remaining photo-sensitive sensor pixels 110-m, 110-m+1, ... of the plurality of photo-sensitive sensor pixels. The first subset and the second subset comprise different ones of the plurality of photo-sensitive sensor pixels 110-1, 110-2, ..., i.e., the first subset and the second subset do not both comprise a same photo-sensitive sensor pixel. The first subset and the second subset may each comprise any number $L \geq 2$ of photo-sensitive sensor pixels. The first subset and the second subset may both comprise the same number of photo-to-sensitive sensor pixels or comprises different numbers of pixels. For example, first subset and the second subset may each comprise 32 x 32 photo-sensitive sensor pixels.

The first common charge storage 120 is coupled to only the first subset of the plurality of photo-sensitive sensor pixels 110-1, 110-2, .... In comparison to the example of Fig. 1, the ToF sensor 200 additionally comprises a second common charge storage 125 coupled to the respective drain terminal 113-m, 113-m+1, ... of the second subset of the plurality of photo-sensitive sensor pixels 110-m, 110-m+1, .... Also the second common charge storage 125 may, e.g., comprise one or more capacitor or potential well formed in a semiconductor material of the second common charge storage 125.

The plurality of photo-sensitive sensor pixels 110-1, 110-2, ... are configured as described above with respect to Fig. 1. That is, for the at least one of the plurality of first ToF measurements, the photo-sensitive sensor pixels of the first subset 110-1, 110-2, ... and the photo-sensitive sensor pixels of the second subset 110-m, 110-m+1,... are configured to drain, via the respective drain terminal 113-1, 113-2, ... 113-m, 113-m+1, ..., part of the charge carriers generated in the respective photo-sensitive sensor pixel during the at least one of the plurality of first ToF measurements by the incident light 101 that is caused by one or more object outside the target measurement range of the ToF sensor 200. Further, the photo-sensitive sensor pixels of the first subset 110-1, 110-2, ... and the photo-sensitive sensor pixels of the second subset 110-m, 110-m+1, ... are configured to selectively store the another part of the charge carriers in the at least two charge storages of the respective photo-sensitive sensor pixel (e.g. the charge carriers that are not drained via the respective drain terminal). For example, the photo-sensitive sensor pixel 110-m may selectively store the other part of the charge carriers in its two charge storages 111-m and 112-m.

As described above, the first common charge storage 120 is configured to accumulate electrical energy conveyed by the currents 114-1, 114-2, ... output by the coupled drain terminals 113-1, 113-2, ... of the first subset of the plurality of photo-sensitive sensor pixels 110-1, 110-2, .... Analogously, the second common charge storage 125 is configured to accumulate electrical energy conveyed by the currents output by the coupled drain terminals 113-m, 113-m+1, ... of the second subset of the plurality of photo-sensitive sensor pixels 110-m, 110-m+1, ....

Similar to what is described above, the first common charge storage 120 is configured to output first data 121 indicative of the accumulated electrical energy of the first subset of the plurality of photo-sensitive sensor pixels 110-1, 110-2, .... Analogously, the second common charge storage 125 is configured to output second data 126 (e.g. digital or analog data) indicative of the accumulated electrical energy of the second subset of the plurality of photo-sensitive sensor pixels 110-m, 110-m+1, ....

The respective accumulated electrical energy may be accumulated by the respective one of the first common charge storage 120 and the second common charge storage 125 according to the principles described above with respect to Fig. 1 (e.g. for a single one of the plurality of first ToF measurements or for multiple of the first ToF measurements).

The processing circuitry 130 is - analogously to what is described above - configured to determine whether one or more object outside the target measurement range of the ToF sensor is present in the scene based on the first data 121 and the second data 126. For example, the processing circuitry 130 may be configured to determine whether one or more object outside the target measurement range of the ToF sensor 100 is present in the scene by comparing each of the accumulated electrical energy indicated by the first data 121 and the accumulated electrical energy indicated by the second data 126 to a threshold value.

Accordingly, the processing circuitry 130 may determine whether one or more object outside the target measurement range of the ToF sensor 100 is present in the scene at all. Further, the processing circuitry 130 may determine whether one or more object outside the target measurement range of the ToF sensor 100 is present in a respective part of the scene sensed by the photo-sensitive sensor pixels of the respective one of the first subset and the second subset. Accordingly, it may be determined for each subset (cluster), whether ambiguity exists (e.g. whether ambiguous distances are measured).

For example, if the first data 121 indicate that one or more object outside the target measurement range of the ToF sensor 200 is present in the scene and the second data 126 indicate that no objects outside the target measurement range of the ToF sensor 200 is present in the scene, the processing circuitry 130 may be configured to control the ToF sensor 200 to perform a plurality of second ToF measurements by controlling read-out circuitry (not illustrated) of the ToF sensor 200 to read-out the photo-sensitive sensor pixels of the first subset 110-1, 110-2, .... but not the photo-sensitive sensor pixels of the second subset 110-m, 110-m+1, ... for the plurality of second ToF measurements. Reading-out only the photo-sensitive sensor pixels of the subset related to the potentially ambiguous measurement values may allow to save energy. For example, less analog to digital conversions may be needed for the read-out process. Alternatively or additionally, the processing circuitry 130 may be configured to control the ToF sensor 200 to perform the plurality of second ToF measurements by controlling the illumination element of the ToF sensor 200 to emit light to a first part of the scene sensed by the photo-sensitive sensor pixels of the first subset 110-1, 110-2, .... but not to a second part of the scene sensed by the photo-sensitive sensor pixels of the second subset 110-m, 110-m+1, .... Illuminating only those parts of the scene, which are sensed by the potentially ambiguous subset(s) may allow to save even more energy. The proposed selective illumination of the scene may, e.g., be enabled by using an addressable array of light sources (e.g. a VCSEL or LED array) in combination with suitable optics for the illumination element, an illumination element that supports steerable illumination beams, or in general any illumination element that supports selective illumination.

If more than two subsets are used, more than two common storage elements may be used such that a respective common storage element is provided for each of the subsets. Accordingly, the presence of one or more object outside the target measurement range of the ToF sensor 200 may be determined for smaller parts of the scene such that the plurality of second ToF measurements may be performed only for one or more of those smaller parts of the scene, which may be more energy efficient.

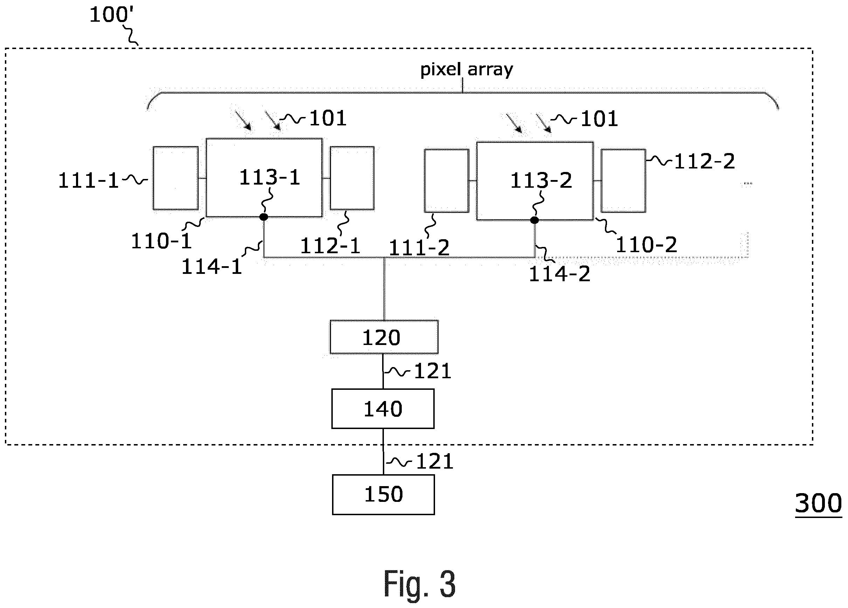

In the above examples, the first data 121 and the second data 126 are analyzed by dedicated processing circuitry 130 of the ToF sensor. However, the present disclosure is not limited thereto. The first data 121 and the second data 126 may alternatively be analyzed by external circuitry. This is exemplarily illustrated in **Fig. 3**.

Fig. 3 illustrates an electronic device 300. The electronic device comprises a ToF sensor 100'. The ToF sensor 100' is identical to the above described ToF sensor 100 except that the processing circuitry 130 is replaced by interface circuitry 140 configured to output the first data 121 to external processing circuitry. In the example of Fig. 3, the external processing circuitry is an application processor 150 of the electronic device 300. The application processor 150 is coupled to the interface circuitry 140 of the ToF sensor 100'.

The application processor 150 is configured to receive the first data 121 and determine, based on the first data 121, whether one or more object outside the target measurement range of the ToF sensor 100' is present in the scene. The application processor 150 determines whether one or more object outside the target measurement range of the ToF sensor 100' is present in the scene according to the principles described above with respect to Fig. 1.

Also the reactions may be as described above in case it is determined that one or more object outside the target measurement range of the ToF sensor 100' is present in the scene. For example, if it is determined that one or more object outside the target measurement range of the ToF sensor 100' is present in the scene, the application processor 150 may be configured to transmit control data to the ToF sensor 100'. That is, the interface circuitry 140 of the ToF sensor 100' may be configured to receive control data for controlling operation of the ToF sensor 100' from external circuitry in response to outputting the first data 121. The control data control the ToF sensor 100' to either:

> a) flag distance data indicating one or more measured distance to one or more object in the scene as potentially ambiguous, the distance data being generated by the ToF sensor 100' based on outputs of the photo-sensitive sensor pixels of at least the first subset for the plurality of first ToF measurements;
> b) perform a plurality of second ToF measurements with a modulation frequency other than that used for the first ToF measurements, and generate distance data indicating one or more distance to one or more object in the scene based on outputs of the photo-sensitive sensor pixels of at least the first subset for the plurality of first ToF measurements and the plurality of second ToF measurements; or
> c) perform a plurality of second ToF measurements using a second target measurement range that extends beyond the target measurement range of the ToF sensor 100' for the plurality of first ToF measurements, and generate distance data indicating one or more distance to one or more object in the scene based on outputs of the photo-sensitive sensor pixels of at least the first subset for the plurality of second ToF measurements.

It is to be noted that the present disclosure is not limited to using a ToF sensor, in which all of the plurality of photo-sensitive sensor pixels are coupled to the same common charge storage. Alternatively, the ToF sensor 200 described above may be modified by replacing the processing circuitry 130 with the interface circuitry 140 and be used for the electronic device.

Accordingly, the application processor 150 may be configured to further receive the second data 126 and determine, further based on the second data 126, whether one or more object outside the target measurement range of the ToF sensor is present in the scene. The application processor 150 determines whether one or more object outside the target measurement range of the ToF sensor is present in the scene according to the principles described above with respect to Fig. 2. Accordingly, the application processor 150 may control the ToF sensor to selectively illuminate the scene and/or selectively read-out only part of the plurality of photo-sensitive sensor pixels for the plurality of second ToF measurements - similar to what is described above. In other words, the interface circuitry of the ToF sensor may be configured to receive control data for controlling operation of the ToF sensor from external circuitry in response to outputting the first data and the second data.

For example, the electronic device 300 may be one of a portable user device such as a mobile phone, a smartphone or a tablet-computer. Alternatively, the electronic device 300 may be an electronic device for an automotive vehicle.

In general, ToF sensors according to the present disclosure may be used for any application, where a short measurement range is typically expected, but out-of-range objects would cause trouble by, e.g., introducing ambiguous distances.

For example, for three-dimensional (3D) scanning, the ToF sensor may start by scanning at a short range. If there is one or more object at a further range, the measurement range would be dynamically extended due to the content(s) (i.e. the accumulated electrical energy) of the at least one common charge storage.

For example, for auto focusing or providing an artificial Bokeh effect, a reliable short-range distance (depth) measurement may be provided. Either by determining, based on the content(s) of the at least one common charge storage, that the distance (depth) measurement based on the first ToF measurements alone does not suffer from ambiguity, or by performing the additional second ToF measurements in case the content(s) of the at least one common charge storage indicate one or more out-of-range object.

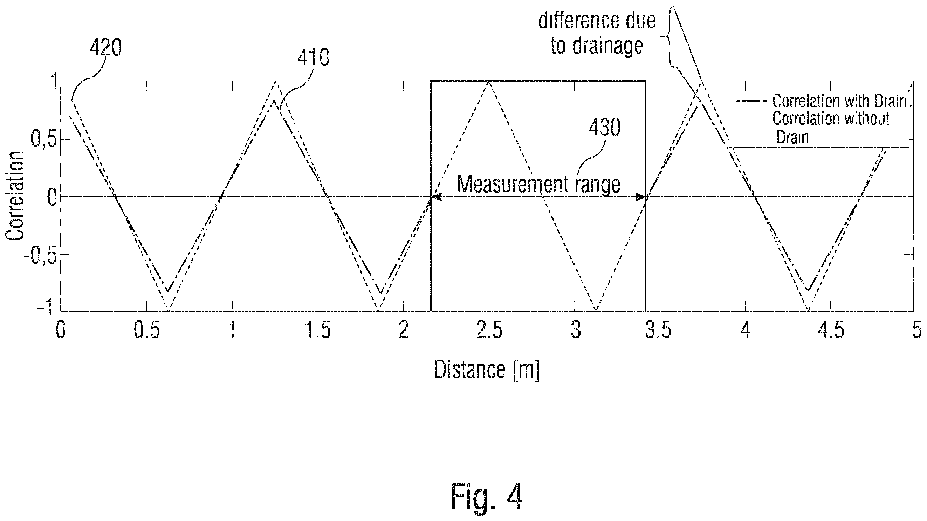

**Fig. 4** illustrates the effect of the proposed charge drainage on the respective (light-intensity-independent) correlation function of the photo-sensitive sensor pixels.

The respective (light-intensity-independent) correlation function gives the photo-sensitive sensor pixel's distance-dependent correlation of the respectively received incident light 101 with one or more respective reference (drive) signal and without considering (i.e. ignoring, not taking into account) the intensity of the incident light 101. The respective photo-sensitive sensor pixel is driven based on the one or more respective reference (drive) signal. In other words, the respective (light-intensity-independent) correlation function only describes the distance-dependency of the photo-sensitive sensor pixel's output but not the dependency of the photo-sensitive sensor pixel's output on the intensity of the incident light 101.

The respective (light-intensity-independent) correlation function of the photo-sensitive sensor pixels is periodic over distance. The period length $d_{period1}$ of the (light-intensity-independent) correlation functions of the plurality of first ToF measurements further allows to determine the modulation frequency $f_{mod1}$ for the plurality of first ToF measurements using the speed of light c:

$$f_{mod1} = \frac{c}{2 \cdot d_{period1}} \qquad (1)$$

Analogously, the modulation frequency for the plurality of second ToF measurements may be determined.

Fig. 4 illustrates two exemplary (light-intensity-independent) correlation functions 410 and 420. The abscissa of Fig. 4 denotes the distance between the ToF sensor and an object causing the incident light. The ordinate denotes the value of the respective correlation function. Further illustrated in Fig. 4 is an exemplary target measurement range 430 of the ToF sensor.

The correlation function 410 is a correlation function for one of the above described first ToF measurements, i.e., a correlation for a ToF measurement using the proposed charge carrier drainage. The correlation function 420 is a reference correlation function for a ToF measurement that is identical to the ToF measurement of the correlation function 410 except that the proposed charge carrier drainage is not used.

As can be seen from Fig. 4, the correlation functions 410 and 420 are identical in the target measurement range 430 of the ToF sensor. In other words, a ToF measurement using the proposed charge carrier drainage behaves substantially exactly like a conventional ToF measurement in the target measurement range 430 of the ToF sensor. However, outside the target measurement range 430 of the ToF sensor, the amplitude of the correlation function 410 is decreased (smaller) compared to the amplitude of the correlation function 420. Due to the partial drainage of the charge carriers generated by incident light that is caused by one or more object outside the target measurement range 430, less charge carriers are correlated with the one or more reference (drive) signals driving the photo-sensitive sensor pixel. The more charge carriers are drained, the greater is the difference between both correlation functions 410 and 420.

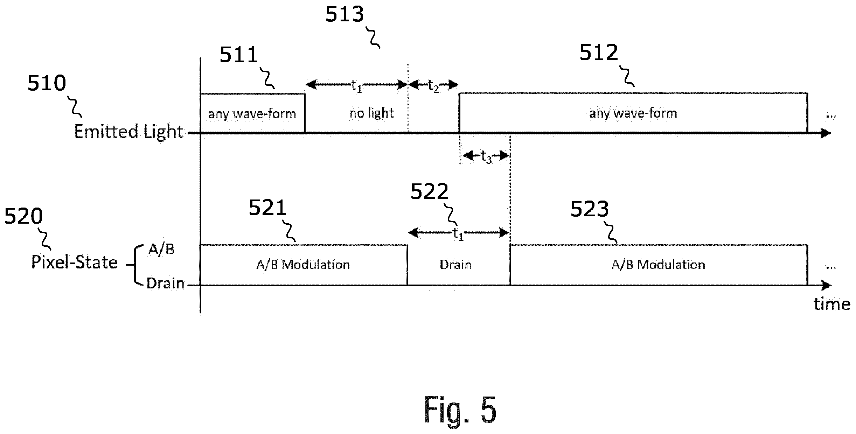

There are various, substantially infinite ways configuring (shaping) the one or more reference (drive) signals driving the respective photo-sensitive sensor pixel and the illumination signal for driving the illumination element in order to create correlation functions that behave like in the above described example of Fig. 4. Therefore, it is to be noted that the present disclosure is not limited to the specific configuration (shape) of the one or more reference (drive) signals and the illumination signal. The signal structures illustrated in **Fig. 5** are, hence, merely for illustration.

Fig. 5 illustrates in the upper part the temporal course 510 of the illumination of the scene. The lower part of Fig. 5 illustrates the temporal course 520 of the operational behavior of an exemplary photo-sensitive sensor pixel of the ToF sensor. The abscissa denotes time for both temporal courses. The signal structures of Fig. 5 may be used for at least one of the plurality of first ToF measurements described above.

As can be seen from the temporal course 510, the illumination element of the ToF sensor emits a plurality of sequences of light pulses to the scene for the first ToF measurement. This is exemplarily illustrated in Fig. 5 by the two sequences 511 and 512. The sequences of light pulses may be of arbitrary waveform (i.e. arbitrary pulse lengths and pulse spacings in time). The illumination element pauses light emission in a respective pause interval between succeeding ones of the plurality of sequences of light pulses. This is exemplarily illustrated in Fig. 5 by the pause interval 513 between the two sequences 511 and 512.

As can be seen from the temporal course 520, the photo-sensitive sensor pixel of the ToF sensor selectively stores the generated charge carriers in the at least two charge storages of the photo-sensitive sensor pixel during the time intervals 521 and 523. In other words, the exemplary photo-sensitive sensor pixel of the ToF sensor provides an integration state during which the charge carriers are being selectively stored in the at least two charge storages.

During the time interval 522, the photo-sensitive sensor pixel of the ToF sensor drains the generated charge carriers. In other words, the exemplary photo-sensitive sensor pixel of the ToF sensor provides a drain (non-integrating) state during which the charge carriers are drained via the drain terminal of the ToF sensor's photo-sensitive sensor pixel.

As illustrated in Fig. 5, the pause interval 513 may be understood as a superposition of two time intervals ti and $t_2$. The time interval ti denotes an arbitrary time interval that determines the ratio of drained charge carriers. The time interval 522 is identical to the time interval ti. The longer the time interval ti is, the more charge carriers are drained. The beginning of the time interval 522, during which the photo-sensitive sensor pixel of the ToF sensor drains the generated charge carriers, is shifted (is late) with respect to the end of the sequence 511, i.e. one of the plurality of sequences of light pulses emitted to the scene, by the time interval ti. In other words, the photo-sensitive sensor pixel begins to drain the generated charge carriers after a predetermined time (interval) has elapsed since the last light pulse of one of the plurality of sequences of light pulses was emitted to the scene. The length of the predetermined time (interval) determines the ratio of drained charge carriers, a relatively longer time interval corresponding to more charge carriers being drained at maximum. This may be done for each of the plurality of sequences of light pulses emitted to the scene.

The time interval $t_2$ denotes the round trip time for a light pulse from the ToF sensor to a distant (i.e. the far end) end of the target measurement range of the ToF sensor and back. In other words, the time interval $t_2$ denotes twice the propagation time for a light pulse from the ToF sensor to a distant (i.e. the far end) end of the target measurement range of the ToF sensor.

When an object causing the reflections included in the incident light at the ToF sensor is outside the target measurement range, at least part of the reflections arrives at the ToF sensor during the time interval 522 and are, hence, drained to the common charge storage coupled to the drain terminal of the photo-sensitive sensor pixel. On the other hand, when an object is located inside the target measurement range, substantially none of the reflections arrives at the ToF sensor during the time interval 522. Hence, substantially none of the charge carriers generated by reflections originating from within the target measurement range are drained.

The time interval $t_3$ between the beginning of the sequence 512 and the beginning of the time interval 523 may allow to adjust the near (close) end of the target measurement range of the ToF sensor. The longer the time interval $t_3$ is, the further away is the near (close) end of the target measurement range from the ToF sensor.

The signal structures of Fig. 5 may be repeated several times during the respective ToF measurement. The intervals illustrated in Fig. 5 do not need to be regular.

In other words, for the at least one of a plurality of first ToF measurements, the photo-sensitive sensor pixels of at least the first subset may operate according a state pattern, the state pattern alternatingly comprising the integration state and the drain state such that each two subsequent integration states are separated by a drain state. By alternatingly draining and storing the charge carriers over time and by selecting (adjusting) appropriate durations for the integration state(s) and the drain state(s), the timing(s) and duration(s) of the drain state(s) during the at least one of a plurality of first ToF measurements may be adjusted such that at least part of the incident light (i.e. reflections) arriving at the ToF sensor from an object outside the target measurement range are drained and that substantially none of the incident light (i.e. reflections) arriving at the ToF sensor from an object within the target measurement range are drained.

As can be seen from Fig. 5, the illumination element of the ToF sensor may pause light emission in a respective pause interval between succeeding ones of the plurality of sequences of light pulses such that each pause interval is longer than twice a propagation time for a light pulse from the ToF sensor to a distant end of the target measurement range of the ToF sensor. The longer each pause is, the more charge carriers are drained.

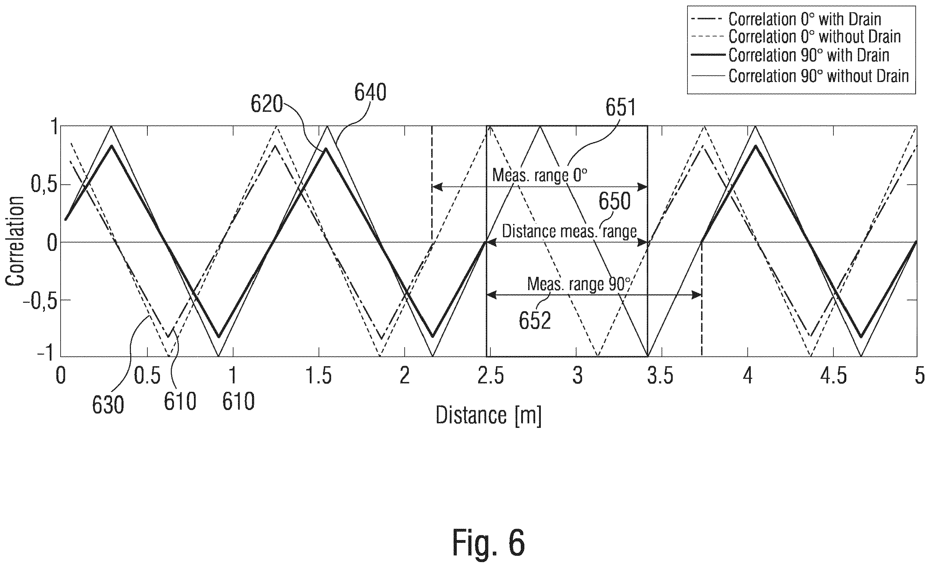

As described above, the correlation functions of the different first ToF measurements are shifted with respect to each other. This is exemplarily illustrated in **Fig. 6**. Fig. 6 illustrates two exemplary (light-intensity-independent) correlation functions 610 and 620 for two first ToF measurements. The shift between the correlation functions of the different first ToF measurements may, e.g., be achieved by respectively using different time offsets for the plurality of first ToF measurements between the respective modulated light emitted to the scene during the respective first ToF measurement and the respective one or more reference (drive) signal used to drive the plurality of photo-sensitive sensor pixels during the respective first ToF measurement. The time offsets used for the first ToF measurements may be integer multiples of a fraction of a first period length $T_1$ given by the inverse of the first modulation frequency $f_{mod1}$, that is:

$$T_1 = \frac{1}{f_{mod1}} \qquad (2)$$

For example, time offsets $n \cdot T_1/4$ with $n = 0,1$ may be used in case two first ToF measurements are performed. Similarly, time offsets $n \cdot T_1/4$ with $n = 0,1, 2, 3$ may be used in case four first ToF measurements are performed. The modulated light emitted to the scene during the first ToF measurements may be identical. Accordingly, the one or more reference (drive) signal used for the first ToF measurements may time shifted by $n \cdot T_1/4$.

Further, Fig. 6 illustrates the measurement range 651 for the first ToF measurement belonging to the correlation function 610 and the measurement range 652 for the first ToF measurement belonging to the correlation function 620. As can be seen from Fig. 6, the measurement ranges 651 and 652 for the correlation functions 610 and 620 are slightly different from each other, but overlap. The target measurement range 650 of the ToF sensor is given by the distance region in which the measurement ranges 651 and 652 for the correlation functions 610 and 620 overlap.

Further illustrated in Fig. 6 are the reference correlation functions 630 and 640. The reference correlation functions 630 and 640 are correlation functions for ToF measurements that are identical to the ToF measurement of the correlation functions 610 and 620 except that the proposed charge carrier drainage is not used.

As can be seen from Fig. 6, the correlation functions 610 and 620 are identical to the respective reference correlation functions 630 and 640 in the respective measurement range 651 and 652 and, hence, in the target measurement range 650 of the ToF sensor. However, outside the target measurement range 650 of the ToF sensor, the amplitudes of the correlation functions 610 and 620 are decreased (smaller) compared to the amplitudes of the reference correlation functions 630 and 640 due to the charge carrier drainage.

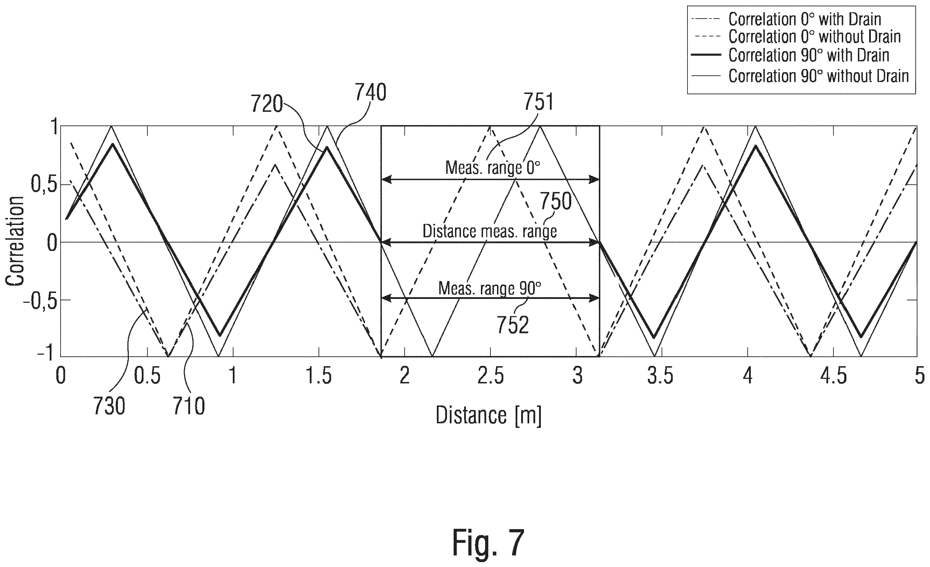

However, it is to be noted that the measurement ranges of the individual first ToF measurements need not differ from each other. They may be identical in other examples. This is exemplarily illustrated in **Fig. 7**.

Similar to the example of Fig. 6, Fig. 7 illustrates two exemplary (light-intensity-independent) correlation functions 710 and 720 for two first ToF measurements. The correlation functions 710 and 720 are again shifted with respect to each other. Further illustrated are reference correlation functions 730 and 740. The reference correlation functions 730 and 740 are correlation functions for ToF measurements that are identical to the ToF measurement of the correlation functions 710 and 720 except that the proposed charge carrier drainage is not used.

Contrary to the example of Fig. 6, the measurement range 751 for the first ToF measurement belonging to the correlation function 710 is identical to the measurement range 752 for the first ToF measurement belonging to the correlation function 720. Accordingly, the target measurement range 750 of the ToF sensor is identical to the measurement ranges 751 and 752.

It is to be noted that the (target) measurement ranges illustrated in Figs. 4, 6 and 7 are merely exemplary and that other distance ranges may be used as well (e.g. from 0 m to 1.5 m).

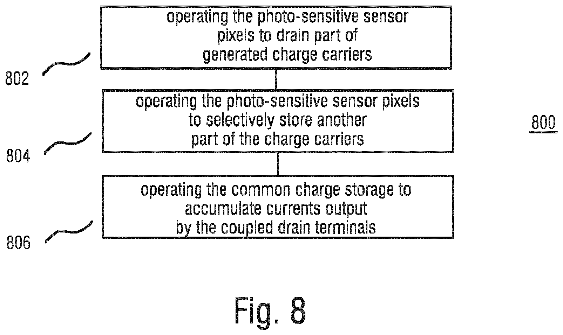

In order to summarize the proposed ToF sensing with charge carrier draining, **Fig. 8** illustrates a flowchart of an example of a method 800 for operating a ToF sensor. The ToF sensor comprises a plurality of photo-sensitive sensor pixels each comprising at least two charge storages and a drain terminal. Further, the ToF sensor comprises a common charge storage coupled to the respective drain terminal of at least a first subset of the plurality of photo-sensitive sensor pixels.

The method 800 comprises operating 802, for at least one of a plurality of first ToF measurements, the photo-sensitive sensor pixels of at least the first subset to drain, via the respective drain terminal, part of charge carriers generated in the respective photo-sensitive sensor pixel during the at least one of the plurality of first ToF measurements by incident light caused by one or more object outside a target measurement range of the ToF sensor.

In addition, the method 800 comprises operating 804, for the at least one of the plurality of first ToF measurements, the photo-sensitive sensor pixels of at least the first subset to selectively store another part of the charge carriers in the at least two charge storages of the respective photo-sensitive sensor pixel.

The method 800 further comprises operating 806 the common charge storage to accumulate electrical energy conveyed by the currents output by the coupled drain terminals and output first data indicative of the accumulated electrical energy.

The method 800 may allow to provide first data that allow to efficiently determine whether any ambiguity is present in the output data of the plurality of photo-sensitive sensor pixels for the at least one of the plurality of first ToF measurements.

More details and aspects of the method 800 are explained in connection with the proposed technique or one or more examples described above. The method 800 may comprise one or more additional optional features corresponding to one or more aspects of the proposed technique or one or more examples described above. For example, the method 800 may further comprise determining, based on the first data, whether one or more object outside the target measurement range of the ToF sensor is present in a scene. Alternatively, the method 800 may further comprise outputting the first data to external processing circuitry, and receiving control data for controlling operation of the ToF sensor from the external circuitry in response to outputting the first data.

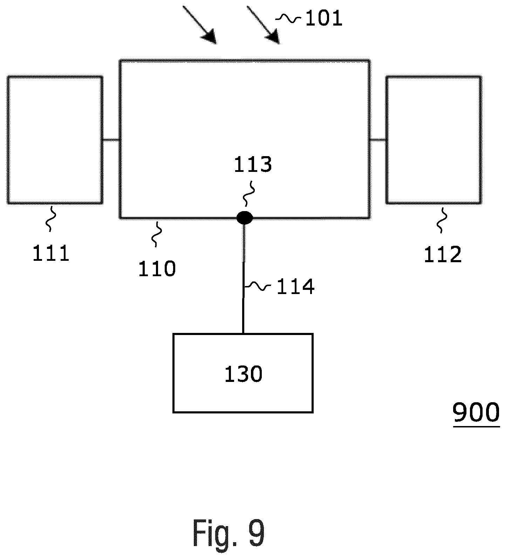

In the above examples, electrical energy conveyed by the currents are accumulated during one or more ToF measurements. However, the present disclosure is not limited thereto. Alternatively, the current of each cell may individually be analyzed. This is exemplarily illustrated in **Fig. 9** illustrating another ToF sensor 900 for sensing a scene.

The ToF sensor 900 comprises at least one photo-sensitive sensor pixel 110. The at least one photo-sensitive sensor pixel 110 is formed and configured liked the photo-sensitive sensor pixels described above with respect to Figs. 1 to 8. In particular, the at least one photo-sensitive sensor pixel 10 comprises at least two charge storages 111 and 112 as well as a drain terminal 113.

Analogously to what is described above, the ToF sensor 900 is configured to perform a plurality of first ToF measurements and, hence, emit modulated light to the scene. Although not illustrated in Fig. 9, the ToF sensor 900 may optionally further comprise an illumination element (device, circuitry) as described above

As described above, at least part of the incident light 101 may be caused by one or more object within a target measurement range of the ToF sensor 900. Further, at least part of the incident light 101 may be caused by one or more object outside the target measurement range of the ToF sensor 900. For example, at least part of the reflections included in the incident light 101 may be caused by one or more object within the target measurement range and/or at least part of the reflections included in the incident light 101 may be caused by one or more object outside the target measurement range.

For at least one of a plurality of first ToF measurements, the at least one photo-sensitive sensor pixel 110 is - analogously to what is described above - configured to drain, via the drain terminal 113, part of charge carriers generated in the photo-sensitive sensor pixel 110 during the at least one of the plurality of first ToF measurements by incident light 101 that is caused by one or more object outside a target measurement range of the ToF sensor. For example, the at least one photo-sensitive sensor pixel 110 may be configured to drain at least 5 %, 10 %, 15 %, 20 % or 25 % of the charge carriers generated in the at least one photo-sensitive sensor pixel 110 during the at least one of the plurality of first ToF measurements by incident light 101 caused by one or more object outside the target measurement range of the ToF sensor 900.

Further, for the at least one of the plurality of first ToF measurements, the at least one photo-sensitive sensor pixel 110 is - analogously to what is described above - configured to selectively store another part of the charge carriers in the at least two charge storages 111 and 112 of the photo-sensitive sensor pixel 110 (e.g. the charge carriers that are not drained via the drain terminal 113).

For the at least one of the plurality of first ToF measurements, the at least one photo-sensitive sensor pixel 110 is - analogously to what is described above - configured to drain, via the respective drain terminal, less than 5 %, 4 %, 3 %, 2 % or 1 % of the charge carriers generated in the at least one photo-sensitive sensor pixel 110 during the at least one of the plurality of first ToF measurements by incident light 101 caused by one or more object inside the measurement range of the ToF sensor 900. In some examples, none of the charge carriers generated in the at least one photo-sensitive sensor pixel 110 during the at least one of the plurality of first ToF measurements by incident light 101 that is caused by one or more object inside the measurement range are drained. In other words, the charge carriers generated in the at least one photo-sensitive sensor pixel 110 by incident light 101 caused by one or more object inside the measurement range of the ToF sensor 900 are substantially not drained. That is, almost exclusively charge carriers generated in the at least one photo-sensitive sensor pixel 110 by incident light 101 caused by one or more object outside the measurement range are drained.

Unlike in the above examples, the drain terminal 113 is not coupled to a common charge storage. Instead, the ToF sensor 900 comprises processing circuitry 130 coupled to the drain terminal 113. The processing circuitry may be formed analogously to what is described above. The processing circuitry 130 is configured to determine, based on the current 114 output by the drain terminal 113, whether one or more object outside the target measurement range of the ToF sensor is present in the scene. For example, the processing circuitry 130 may be configured to determine whether one or more object outside the target measurement range of the ToF sensor 900 is present in the scene by comparing the current output 114 by the drain terminal 113 to a reference (e.g. a reference current).

The drained charge carriers are charge carriers caused substantially exclusively by one or more object outside the target measurement range of the ToF sensor 900. Accordingly, the current output 114 by the drain terminal 113 is indicative of whether one or more object outside the target measurement range of the ToF sensor 900 is present in the sensed scene. Accordingly, the ToF sensor 900 may allow to efficiently determine whether any ambiguity is present in the output data of the at least one photo-sensitive sensor pixel 110 (i.e. the ToF sensor 900) for the at least one of the plurality of first ToF measurements.

It is to be noted that the at least one photo-sensitive sensor pixel 110 and the processing circuitry 130 may optionally be configured to perform the above described behavior for more than one ToF measurement of the plurality of first ToF measurements (e.g. for all of the plurality of first ToF measurements). Similarly, the ToF sensor 900 may comprises a plurality of photo-sensitive sensor pixels that are formed and configured like the photo-sensitive sensor pixel 110. Separate processing circuitries may be provided for the plurality of photo-sensitive sensor pixels. Alternatively, the drain terminals of plural photo-sensitive sensor pixels may be coupled to one processing circuitry such that the one processing circuitry analyzes the output currents of the plural photo-sensitive sensor pixels. For example, the drain terminals of all of the plurality of photo-sensitive sensor pixels may be coupled to the processing circuitry 130 such that the processing circuitry 130 analyzes the output currents of all of the plurality of photo-sensitive sensor pixels. Alternatively, clustering may be used such that different processing circuitries are provided for (and coupled to) different subsets of the plurality of photo-sensitive sensor pixels.

Analogously to what is described above, the ToF sensor 900 may react in various ways if it is determined that one or more object outside the target measurement range of the ToF sensor is present in the scene. For example, if it is determined that one or more object outside the target measurement range of the ToF sensor 900 is present in the scene, the processing circuitry 130 may be configured to control the ToF sensor 900 to either:

a) flag distance data indicating one or more measured distance to one or more object in the scene as potentially ambiguous, the distance data being generated by the ToF sensor 900 based on an output (output data) of the at least one photo-sensitive sensor pixel 110 for the plurality of first ToF measurements;

b) perform a plurality of second ToF measurements with a modulation frequency other than that used for the first ToF measurements, and generate distance data indicating one or more distances to one or more object in the scene based on outputs of the at least one photo-sensitive sensor pixel for the plurality of first ToF measurements and the plurality of second ToF measurements; or

c) perform a plurality of second ToF measurements using a second target measurement range that extends beyond the target measurement range of the ToF sensor 900 for the plurality of first ToF measurements, and generate distance data indicating one or more distance to one or more object in the scene based on outputs of the at least one photo-sensitive sensor pixel for the plurality of second ToF measurements.

However, it is to be noted that the ToF sensor is not limited the above described exemplary reactions.

Further, it is to be noted that although not explicitly illustrated in Fig. 9, the ToF sensor 900 may optionally comprise one or more other elements described above such as optics (e.g. one or more lenses) or electronic circuitry (e.g. read-out circuitry or ADC circuitry).

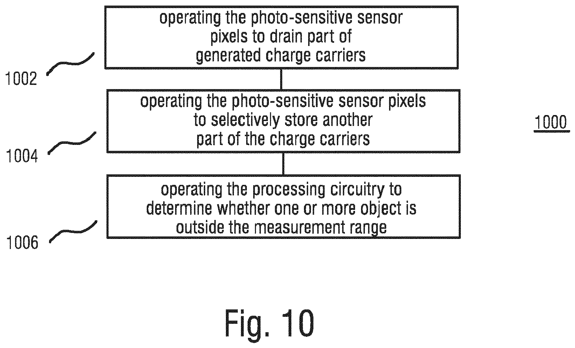

**Fig. 10** further illustrates a flowchart of an example of another method 1000 for operating a ToF sensor. The ToF sensor comprises at least one photo-sensitive sensor pixel comprising at least two charge storages and a drain terminal. Further, the ToF sensor comprises processing circuitry coupled to the drain terminal.

The method 1000 comprises operating 1002, for at least one of a plurality of first ToF measurements, the at least one photo-sensitive sensor pixel to drain, via the drain terminal, part of charge carriers generated in the photo-sensitive sensor pixel during the at least one of the plurality of first ToF measurements by incident light caused by one or more object outside a target measurement range of the ToF sensor.

Additionally, the method 1000 comprises operating 1004, for the at least one of the plurality of first ToF measurements, the at least one photo-sensitive sensor pixel to selectively store another part of the charge carriers in the at least two charge storages of the photo-sensitive sensor pixel.

The method 1000 further comprises operating 1006 the processing circuitry to determine, based on a current output by the drain terminal, whether one or more object outside the target measurement range of the ToF sensor is present in a scene.

Like the ToF sensor 900, the method 1000 may allow to efficiently determine whether any ambiguity is present in the output data of the at least one photo-sensitive sensor pixel for the at least one of the plurality of first ToF measurements.

More details and aspects of the method 1000 are explained in connection with the proposed technique or one or more examples described above. The method 1000 may comprise one or more additional optional features corresponding to one or more aspects of the proposed technique or one or more examples described above.

Aspects of the present disclosure may provide a ToF sensor with a global pixel terminal for dynamic range extension.

Examples of the present disclosure may enable to efficiently determine, whether there is any ambiguity and, optionally, whether any additional ToF measurements are necessary. For example, examples of the present disclosure may enable to conduct a conventional four phase (or similar) ToF measurement, while simultaneously determining whether there are objects located in the fore or background of the target measurement range. Such objects would be measured ambiguously without additional measurement. Due to the technology of the present disclosure, however, it may be determined that these objects exist, and the ambiguity may be resolved by capturing additional images to resolve the ambiguity. For example, a PMD pixel which is able to direct charges to multiple terminals may be used. Some terminals are connected to pixel internal charge storage elements, while there is one terminal connected to a common (e.g. to all pixels) charge storage element. For example, a pixel array with PMD ToF pixels may be used, wherein one PMD tap is globally connected. In combination with one of the above modulation schemes, the presence of objects which are outside the measurement range may be detected.

## Claims

1. A Time-of-Flight, ToF, sensor (100, 100', 200), comprising:

a plurality of photo-sensitive sensor pixels (110-1, 110-2) each comprising at least two charge storages (111-1, 111-2, 112-1, 112-2) and a drain terminal (113-1, 113-2); and a common charge storage (120) coupled to the respective drain terminal (113-1, 113-2) of at least a first subset of the plurality of photo-sensitive sensor pixels (110-1, 110-2), wherein the first subset comprises two or more of the plurality of photo-sensitive sensor pixels (110-1, 110-2), wherein the common charge storage (120) comprises one or more capacitor or potential well formed in a semiconductor material of the common charge storage (120), wherein the common charge storage (120) is an element separate from the plurality of photo-sensitive sensor pixels (110-1, 110-2), wherein, for at least one of a plurality of first ToF measurements, the photo-sensitive sensor pixels of at least the first subset are configured to:

via the respective drain terminal (113-1, 113-2), drain part of charge carriers generated in the respective photo-sensitive sensor pixel during the at least one of the plurality of first ToF measurements by incident light caused by one or more object outside a target measurement range of the ToF sensor; and
selectively store another part of the charge carriers in the at least two charge storages (111-1, 111-2, 112-1, 112-2) of the respective photo-sensitive sensor pixel,

wherein the common charge storage (120) is configured to accumulate electrical energy conveyed by currents (114-1, 114-2) output by the coupled drain terminals (113-1, 113-2) and output first data (121) indicative of the accumulated electrical energy.

2. The ToF sensor (100, 100') of claim 1, wherein the common charge storage (120) is coupled to the respective drain terminal (113-1, 113-2) of all of the plurality of photo-sensitive sensor pixels, and wherein, for the at least one of the plurality of first ToF measurements, all of the plurality of photo-sensitive sensor pixels (110-1, 110-2) are configured to:

via the respective drain terminal (113-1, 113-2), drain part of the charge carriers generated in the respective photo-sensitive sensor pixel by the incident light caused by the one or more object outside the target measurement range of the ToF sensor; and
selectively store the other part of the charge carriers in the at least two charge storages (111-1, 111-2, 112-1, 112-2).

3. The ToF sensor (200) of claim 1, wherein:

the common charge storage (120) is coupled to only the first subset of the plurality of photo-sensitive sensor pixels,
the ToF sensor further comprises a second common charge storage (125) coupled to the respective drain terminal of a second subset of the plurality of photo-sensitive sensor pixels (110-m, 110-m+1), the second subset being different from the first subset,
for the at least one of the plurality of first ToF measurements, the photo-sensitive sensor pixels of the second subset are configured to:

via the respective drain terminal (113-m, 113-m+1), drain part of charge carriers generated in the respective photo-sensitive sensor pixel during the at least one of the plurality of first ToF measurements by the incident light caused by the one or more object outside the target measurement range of the ToF sensor; and
selectively store another part of the charge carriers in the at least two charge storages (111-0, 111- m+1, 112-0, 112- m+1) of the respective photo-sensitive sensor pixel, and

the second common charge storage (125) is configured to accumulate electrical energy conveyed by currents (114-m, 114-m+1) output by the coupled drain terminals and output second data (126) indicative of the accumulated electrical energy.

4. The ToF sensor (100, 100', 200) of any one of claims 1 to 3, wherein, for the at least one of the plurality of first ToF measurements, the photo-sensitive sensor pixels of at least the first subset are configured to drain, via the respective drain terminal (113-1, 113-2), less than 5 % of charge carriers generated in the respective photo-sensitive sensor pixel during the at least one of the plurality of first ToF measurements by incident light caused by one or more object inside the measurement range of the ToF sensor.

5. The ToF sensor (100, 100', 200) of any one of claims 1 to 4, wherein the common charge storage (120) is configured to accumulate the electrical energy conveyed by the currents (114-1, 114-2) output by the coupled drain terminals (113-1, 113-2) for only one of the plurality of first ToF measurements such that the first data are indicative of the amount of electrical energy accumulated for the one of the plurality of first ToF measurements.

6. The ToF sensor (100, 100', 200) of any one of claims 1 to 5, wherein the common charge storage (120) is configured to accumulate the electrical energy conveyed by the currents (114-1, 114-2) output by the coupled drain terminals (113-1, 113-2) for at least two of the plurality of first ToF measurements such that the first data are indicative of the amount of electrical energy accumulated for the at least two of the plurality of first ToF measurements.

7. The sensor (100, 100', 200) of any one of claims 1 to 6, further comprising:
an illumination element configured to emit a plurality of sequences of light pulses to a scene for the at least one of the plurality of first ToF measurements, wherein the illumination element is configured to pause light emission in a respective pause interval between succeeding ones of the plurality of sequences of light pulses.

8. The sensor (100, 100', 200) of claim 7, wherein each pause interval is longer than twice a propagation time for a light pulse from the ToF sensor to a distant end of the target measurement range of the ToF sensor.

9. The ToF sensor (100, 100', 200) of any one of claims 1 to 8, further comprising: processing circuitry (130) configured to determine, based on the first data (121), whether one or more object outside the target measurement range of the ToF sensor is present in a scene.

10. The ToF sensor (100, 100', 200) of claim 9, wherein the processing circuitry (130) is configured to determine whether one or more object outside the target measurement range of the ToF sensor is present in the scene by comparing the accumulated electrical energy indicated by the first data (121) to a threshold value.

11. The ToF sensor (100, 100', 200) of claim 9 or claim 10, wherein, if it is determined that one or more object outside the target measurement range of the ToF sensor is present in the scene, the processing circuitry (130) is configured to flag distance data indicating one or more distance to one or more object in the scene as potentially ambiguous, the distance data being generated by the processing circuitry (130) based on outputs of the photo-sensitive sensor pixels of at least the first subset for the plurality of first ToF measurements.

12. The ToF sensor (100, 100', 200) of claim 9 or claim 10, wherein, if it is determined that one or more object outside the target measurement range of the ToF sensor is present in the scene, the processing circuitry (130) is configured to:

control the ToF sensor to perform a plurality of second ToF measurements with a modulation frequency other than that used for the first ToF measurements; and
generate distance data indicating one or more distance to one or more object in the scene based on outputs of the photo-sensitive sensor pixels of at least the first subset for the plurality of first ToF measurements and the plurality of second ToF measurements.

13. The ToF sensor (100, 100', 200) of claim 9 or claim 10, wherein, if it is determined that one or more object outside the target measurement range of the ToF sensor is present in the scene, the processing circuitry (130) is configured to:

control the ToF sensor to perform a plurality of second ToF measurements using a second target measurement range that extends beyond the target measurement range of the ToF sensor for the plurality of first ToF measurements; and
generate distance data indicating one or more distance to one or more object in the scene based on outputs of the photo-sensitive sensor pixels of at least the first subset for the plurality of second ToF measurements.

14. The ToF sensor (200) of claim 3 and any one of claims 12 and 13, wherein

the processing circuitry is further configured to determine whether one or more object outside the target measurement range of the ToF sensor is present in the scene based on the second data,
wherein, if the first data indicate that one or more object outside the target measurement range of the ToF sensor is present in the scene and the second data indicate that no objects outside the target measurement range of the ToF sensor is present in the scene, the processing circuitry is configured to control the ToF sensor to perform the plurality of second ToF measurements by:

controlling read-out circuitry of the ToF sensor to read-out the photo-sensitive sensor pixels of the first subset but not the photo-sensitive sensor pixels of the second subset for the plurality of second ToF measurements; and/or
controlling an illumination element of the ToF sensor to emit light to a first part of the scene sensed by the photo-sensitive sensor pixels of the first subset but not to a second part of the scene sensed by the photo-sensitive sensor pixels of the second subset.

15. An electronic device (300), comprising:

a Time-of-Flight, ToF, sensor (100') according to any one of claims 1 to 8; and
an application processor (150) coupled to the ToF sensor (100'),
wherein the ToF sensor (100') further comprises interface circuitry (140) configured to output the first data to the application processor (150), and
wherein the application processor (150) is configured to determine based on the first data (121) whether one or more object outside the target measurement range of the ToF sensor (100') is present in a scene.

**Patentansprüche**

1. Ein Laufzeit-, ToF-, Sensor (100, 100', 200), umfassend:

eine Vielzahl von photosensitiven Sensorpixeln (110-1, 110-2), die jeweils zumindest zwei Ladungsspeicher (111-1, 111-2, 112-1, 112-2) und einen Drain-Anschluss (113-1, 113-2) umfassen; und

einen gemeinsamen Ladungsspeicher (120), der mit dem jeweiligen Drain-Anschluss (113-1, 113-2) von zumindest einer ersten Teilmenge der Vielzahl von photosensitiven Sensorpixeln (110-1, 110-2) gekoppelt ist,

wobei die erste Teilmenge zwei oder mehr der Vielzahl von photosensitiven Sensorpixeln (110-1, 110-2) umfasst,

wobei der gemeinsame Ladungsspeicher (120) einen oder mehrere Kondensatoren oder Potentialwannen umfasst, die in einem Halbleitermaterial des gemeinsamen Ladungsspeichers (120) gebildet sind,

wobei der gemeinsame Ladungsspeicher (120) ein von der Vielzahl von photosensitiven Sensorpixeln (110-1, 110-2) getrenntes Element ist,

wobei für zumindest eine einer Vielzahl von ersten ToF-Messungen die photosensitiven Sensorpixel von zumindest der ersten Teilmenge ausgebildet sind:

über den jeweiligen Drain-Anschluss (113-1, 113-2) einen Teil von Ladungsträgern, die in dem jeweiligen photosensitiven Sensorpixel während der zumindest einen der Vielzahl von ersten ToF-Messungen durch von einem oder mehreren Objekten außerhalb eines Zielmessbereichs des ToF-Sensors verursachtes einfallendes Licht erzeugt werden, abzuleiten; und einen anderen Teil der Ladungsträger selektiv in den zumindest zwei Ladungsspeichern (111-1, 111-2, 112-1, 112-2) des jeweiligen photosensitiven Sensorpixels zu speichern,

wobei der gemeinsame Ladungsspeicher (120) ausgebildet ist, elektrische Energie, die durch Ströme (114-1, 114-2) übertragen wird, die von den gekoppelten Drain-Anschlüssen (113-1, 113-2) ausgegeben werden, zu akkumulieren und erste Daten (121), die die akkumulierte elektrische Energie anzeigen, auszugeben.

2. Der ToF-Sensor (100, 100') gemäß Anspruch 1, wobei der gemeinsame Ladungsspeicher (120) mit dem jeweiligen Drain-Anschluss (1 13-1, 113-2) aller der Vielzahl von photosensitiven Sensorpixeln gekoppelt ist, und wobei für die zumindest eine der Vielzahl von ersten ToF-Messungen alle der Vielzahl von photosensitiven Sensorpixeln (110-1, 110-2) ausgebildet sind:

über den jeweiligen Drain-Anschluss (113-1, 113-2) einen Teil der Ladungsträger, die in dem jeweiligen photosensitiven Sensorpixel durch das von dem einen oder den mehreren Objekten außerhalb des Zielmessbereichs des ToF-Sensors verursachte einfallende Licht erzeugt werden, abzuleiten; und den anderen Teil der Ladungsträger selektiv in den zumindest zwei Ladungsspeichern (111-1, 111-2, 112-1, 112-2) zu speichern.

3. Der ToF-Sensor (200) gemäß Anspruch 1, wobei:

der gemeinsame Ladungsspeicher (120) nur mit der ersten Teilmenge der Vielzahl von photosensitiven Sensorpixeln gekoppelt ist, der ToF-Sensor ferner einen zweiten gemeinsamen Ladungsspeicher (125) umfasst, der mit dem jeweiligen Drain-Anschluss einer zweiten Teilmenge der Vielzahl von photosensitiven Sensorpixeln (110-m, 110-m+1) gekoppelt ist, wobei sich die zweite Teilmenge von der ersten Teilmenge unterscheidet,

für die zumindest eine der Vielzahl von ersten ToF-Messungen die photosensitiven Sensorpixel der zweiten Teilmenge ausgebildet sind:

über den jeweiligen Drain-Anschluss (113-m, 113-m+1) einen Teil von Ladungsträgern, die in dem jeweiligen photosensitiven Sensorpixel während der zumindest einen der Vielzahl von ersten ToF-Messungen durch das von dem einen oder den mehreren Objekten außerhalb des Zielmessbereichs des ToF-Sensors verursachte einfallende Licht erzeugt werden, abzuleiten; und selektiv einen anderen Teil der Ladungsträger in den zumindest zwei Ladungsspeichern (111-0, 111- m+1, 112-0, 112- m+1) des jeweiligen photosensitiven Sensorpixels zu speichern, und

wobei der zweite gemeinsame Ladungsspeicher (125) ausgebildet ist, elektrische Energie, die durch Ströme (114-m, 114-m+1) übertragen wird, die von den gekoppelten Drain-Anschlüssen ausgegeben werden, zu akkumulieren und zweite Daten (126), die die akkumulierte elektrische Energie anzeigen, auszugeben.

4. Der ToF-Sensor (100, 100', 200) gemäß einem der Ansprüche 1 bis 3, wobei für die zumindest eine der Vielzahl von ersten ToF-Messungen die photosensitiven Sensorpixel von zumindest der ersten Teilmenge ausgebildet sind, über den jeweiligen Drain-Anschluss (113-1, 113-2) weniger als 5 % der Ladungsträger, die in dem jeweiligen photosensitiven Sensorpixel während der zumindest einen der Vielzahl von ersten ToF-Messungen durch von einem oder mehreren Objekten außerhalb des Zielmessbereichs des ToF-Sensors verursachtes einfallendes Licht erzeugt werden, abzuleiten.

5. Der ToF-Sensor (100, 100', 200) gemäß einem der Ansprüche 1 bis 4, wobei der gemeinsame Ladungsspeicher (120) ausgebildet ist, die elektrische Energie, die durch die von den gekoppelten Drain-Anschlüssen (113-1, 113-2) ausgegebenen Ströme (114-1, 114-2) übertragen wird, für nur eine der Vielzahl von ersten ToF-Messungen derart zu akkumulieren, dass die ersten Daten die Menge von für die eine der Vielzahl von ersten ToF-Messungen akkumulierter elektrischer Energie anzeigen.

6. Der ToF-Sensor (100, 100', 200) gemäß einem der Ansprüche 1 bis 5, wobei der gemeinsame Ladungsspeicher (120) ausgebildet ist, die elektrische Energie, die durch die von den gekoppelten Drain-Anschlüssen (113-1, 113-2) ausgegebenen Ströme (114-1, 114-2) übertragen wird, für zumindest zwei der Vielzahl von ersten ToF-Messungen derart zu akkumulieren, dass die ersten Daten die Menge von für die zumindest zwei der Vielzahl von ersten ToF-Messungen akkumulierter elektrischer Energie anzeigen.

7. Der Sensor (100, 100', 200) gemäß einem der Ansprüche 1 bis 6, ferner umfassend: ein Beleuchtungselement, das ausgebildet ist, eine Vielzahl von Sequenzen von Lichtpulsen an eine Szene für die zumindest eine der Vielzahl von ersten ToF-Messungen zu emittieren, wobei das Beleuchtungselement ausgebildet ist, die Lichtemission in einem jeweiligen Pausenintervall zwischen Aufeinanderfolgenden der Vielzahl von Sequenzen von Lichtpulsen zu pausieren.

8. Der Sensor (100, 100', 200) gemäß Anspruch 7, wobei jedes Pausenintervall länger ist als das Doppelte einer Ausbreitungszeit für einen Lichtpuls von dem ToF-Sensor zu einem entfernten Ende des Zielmessbereichs des ToF-Sensors.

9. Der ToF-Sensor (100, 100', 200) gemäß einem der Ansprüche 1 bis 8, ferner umfassend: eine Verarbeitungsschaltungsanordnung (130), die ausgebildet ist, basierend auf den ersten Daten (121) zu bestimmen, ob ein oder mehrere Objekte außerhalb des Zielmessbereichs des ToF-Sensors in einer Szene vorhanden sind.

10. Der ToF-Sensor (100, 100', 200) gemäß Anspruch 9, wobei die Verarbeitungsschaltungsanordnung (130) ausgebildet ist, durch Vergleichen der akkumulierten elektrischen Energie, die durch die ersten Daten (121) angezeigt wird, mit einem Schwellenwert zu bestimmen, ob ein oder mehrere Objekte außerhalb des Zielmessbereichs des ToF-Sensors in der Szene vorhanden sind.

11. Der ToF-Sensor (100, 100', 200) gemäß Anspruch 9 oder Anspruch 10, wobei, wenn bestimmt wird, dass ein oder mehrere Objekte außerhalb des Zielmessbereichs des ToF-Sensors in der Szene vorhanden sind, die Verarbeitungsschaltungsanordnung (130) ausgebildet ist, Distanzdaten, die eine oder mehrere Distanzen zu einem oder mehreren Objekten in der Szene anzeigen, als potenziell mehrdeutig zu kennzeichnen, wobei die Distanzdaten von der Verarbeitungsschaltungsanordnung (130) basierend auf Ausgaben der photosensitiven Sensorpixel von zumindest der ersten Teilmenge für die Vielzahl von ersten ToF-Messungen erzeugt werden.

12. Der ToF-Sensor (100, 100', 200) gemäß Anspruch 9 oder Anspruch 10, wobei, wenn bestimmt wird, dass ein oder mehrere Objekte außerhalb des Zielmessbereichs des ToF-Sensors in der Szene vorhanden sind, die Verarbeitungsschaltungsanordnung (130) ausgebildet ist:
den ToF-Sensor zu steuern, um eine Vielzahl von zweiten ToF-Messungen mit einer anderen Modulationsfrequenz als der für die ersten ToF-Messungen verwendeten durchzuführen; und Distanzdaten, die eine oder mehrere Distanzen zu einem oder mehreren Objekten in der Szene anzeigen, basierend auf Ausgaben der photosensitiven Sensorpixel von zumindest der ersten Teilmenge für die Vielzahl von ersten ToF-Messungen und die Vielzahl von zweiten ToF-Messungen zu erzeugen.

13. Der ToF-Sensor (100, 100', 200) gemäß Anspruch 9 oder Anspruch 10, wobei, wenn bestimmt wird, dass ein oder mehrere Objekte außerhalb des Zielmessbereichs des ToF-Sensors in der Szene vorhanden sind, die Verarbeitungsschaltungsanordnung (130) ausgebildet ist:

den ToF-Sensor zu steuern, um eine Vielzahl von zweiten ToF-Messungen unter Verwendung eines zweiten Zielmessbereichs, der sich über den Zielmessbereich des ToF-Sensors für die Vielzahl von ersten ToF-Messungen hinaus erstreckt, durchzuführen; und Distanzdaten, die eine oder mehrere Distanzen zu einem oder mehreren Objekten in der Szene anzeigen, basierend auf Ausgaben der photosensitiven Sensorpixel von zumindest der ersten Teilmenge für die Vielzahl von zweiten ToF-Messungen zu erzeugen.

14. Der ToF-Sensor (200) gemäß Anspruch 3 und gemäß einem der Ansprüche 12 und 13, wobei

die Verarbeitungsschaltungsanordnung ferner ausgebildet ist, basierend auf den zweiten Daten zu bestimmen, ob ein oder mehrere Objekte außerhalb des Zielmessbereichs des ToF-Sensors in der Szene vorhanden sind,
wobei, wenn die ersten Daten anzeigen, dass ein oder mehrere Objekte außerhalb des Zielmessbereichs des ToF-Sensors in der Szene vorhanden sind, und die zweiten Daten anzeigen, dass keine Objekte außerhalb des Zielmessbereichs des ToF-Sensors in der Szene vorhanden sind, die Verarbeitungsschaltungsanordnung ausgebildet ist, den ToF-Sensor zu steuern, um die Vielzahl von zweiten ToF-Messungen durchführen, indem:

die Ausleseschaltungsanordnung des ToF-Sensors gesteuert wird, um die photosensitiven Sensorpixel der ersten Teilmenge, aber nicht die photosensitiven Sensorpixel der zweiten Teilmenge für die Vielzahl von zweiten ToF-Messungen auszulesen; und/oder

ein Beleuchtungselement des ToF-Sensors zu steuern, um Licht zu einem ersten Teil der Szene, der von den photosensitiven Sensorpixeln der ersten Teilmenge erfasst wird, aber nicht zu einem zweiten Teil der Szene, der von den photosensitiven Sensorpixeln der zweiten Teilmenge erfasst wird, zu emittieren.

**15.** Eine elektronisches Bauelement (300), umfassend:

einen Laufzeit-, ToF-, Sensor (100') gemäß einem der Ansprüche 1 bis 8; und
einen Anwendungsprozessor (150), der mit dem ToF-Sensor (100') gekoppelt ist,
wobei der ToF-Sensor (100') ferner eine Schnittstellenschaltungsanordnung (140) umfasst, die ausgebildet ist, die ersten Daten an den Anwendungsprozessor (150) auszugeben, und
wobei der Anwendungsprozessor (150) ausgebildet ist, basierend auf den ersten Daten (121) zu bestimmen, ob ein oder mehrere Objekte außerhalb des Zielmessbereichs des ToF-Sensors (100') in einer Szene vorhanden sind.

## Revendications

**1.** Capteur à temps de vol (100, 100', 200), comprenant :

une pluralité de pixels de capteur photosensibles (110-1, 110-2) comprenant chacun au moins deux stockages de charge (111-1, 111-2, 112-1, 112-2) et une borne de drain (113-1, 113-2) ; et
un stockage de charge commun (120) couplé à la borne de drain respective (113-1, 113-2) d'au moins un premier sous-ensemble de la pluralité de pixels de capteur photosensibles (110-1, 110-2),
dans lequel le premier sous-ensemble comprend deux ou plus de la pluralité de pixels de capteur photosensibles (110-1, 110-2),
dans lequel le stockage de charge commun (120) comprend un ou plusieurs condensateurs ou puits de potentiel formés dans un matériau semi-conducteur du stockage de charge commun (120),
dans lequel le stockage de charge commun (120) est un élément distinct de la pluralité de pixels de capteur photosensibles (110-1, 110-2),
dans lequel, pour au moins une d'une pluralité de premières mesures ToF, les pixels de capteur photosensibles d'au moins le premier sous-ensemble sont configurés pour :

via la borne de drain respective (113-1, 113-2), drainer une partie des porteurs de charge générés dans le pixel de capteur photosensible respectif pendant l'au moins une de la pluralité de premières mesures ToF par la lumière incidente causée par un ou plusieurs objets en dehors d'une plage de mesure cible du capteur ToF ; et
stocker sélectivement une autre partie des porteurs de charge dans les au moins deux stockages de charge (111-1, 111-2, 112-1, 112-2) du pixel de capteur photosensible respectif,

dans lequel le stockage de charge commun (120) est configuré pour accumuler de l'énergie électrique véhiculée par des courants (114-1, 114-2) émis par les bornes de drain couplées (113-1, 113-2) et pour émettre des premières données (121) indiquant l'énergie électrique accumulée.

**2.** Capteur ToF (100, 100') selon la revendication 1, dans lequel le stockage de charge commun (120) est couplé à la borne de drain respective (113-1, 113-2) de tous de la pluralité de pixels de capteur photosensibles, et dans lequel, pour l'au moins une de la pluralité de premières mesures ToF, tous de la pluralité de pixels de capteur photosensibles (110-1, 110-2) sont configurés pour :

via la borne de drain respective (113-1, 113-2), drainer une partie des porteurs de charge générés dans le pixel de capteur photosensible respectif par la lumière incidente causée par le ou les objets en dehors de la plage de mesure cible du capteur ToF ; et
stocker sélectivement l'autre partie des porteurs de charge dans les au moins deux stockages de charge (111-1, 111-2, 112-1, 112-2).

3. Capteur ToF (200) selon la revendication 1, dans lequel :

le stockage de charge commune (120) n'est couplé qu'au premier sous-ensemble de la pluralité de pixels de capteur photosensibles,
le capteur ToF comprend en outre un deuxième stockage de charge commun (125) couplé à la borne de drain respective d'un deuxième sous-ensemble de la pluralité de pixels de capteur photosensibles (110-m, 110-m+1), le deuxième sous-ensemble étant différent du premier sous-ensemble,
pour l'au moins une de la pluralité de premières mesures ToF, les pixels de capteur photosensibles du deuxième sous-ensemble sont configurés pour :

via la borne de drain respective (113-m, 113-m+1), drainer une partie des porteurs de charge générés dans le pixel de capteur photosensible respectif pendant l'au moins une de la pluralité de premières mesures ToF par la lumière incidente causée par le ou les objets en dehors de la plage de mesure cible du capteur ToF ;et
stocker sélectivement une autre partie des porteurs de charge dans les au moins deux stockages de charge (111-0, 111- m+1, 112-0, 112- m+1) du pixel de capteur photosensible respectif, et

le deuxième stockage de charge commun (125) est configuré pour accumuler de l'énergie électrique véhiculée par des courants (114-m, 114-m+1) émis par les bornes de drain couplées et pour émettre des deuxièmes données (126) indiquant l'énergie électrique accumulée.

4. Capteur ToF (100, 100', 200) selon l'une des revendications 1 à 3, dans lequel, pour l'au moins une de la pluralité de premières mesures ToF, les pixels de capteur photosensibles d'au moins le premier sous-ensemble sont configurés pour drainer, via la borne de drain respective (113-1, 113-2), moins de 5 % des porteurs de charge générés dans le pixel de capteur photosensible respectif pendant l'au moins une de la pluralité de premières mesures ToF par la lumière incidente causée par un ou plusieurs objets à l'intérieur de la plage de mesure du capteur ToF.

5. Capteur ToF (100, 100', 200) selon l'une des revendications 1 à 4, dans lequel le stockage de charge commun (120) est configuré pour accumuler l'énergie électrique véhiculée par les courants (114-1, 114-2) émis par les bornes de drain couplées (113-1, 113-2) pour une seule de la pluralité de premières mesures ToF de sorte que les premières données sont indicatives de la quantité d'énergie électrique accumulée pour celle de la pluralité de premières mesures ToF.

6. Capteur ToF (100, 100', 200) selon l'une des revendications 1 à 5, dans lequel le stockage de charge commun (120) est configuré pour accumuler l'énergie électrique véhiculée par les courants (114-1, 114-2) émis par les bornes de drain couplées (113-1, 113-2) pour au moins deux de la pluralité de premières mesures ToF de sorte que les premières données sont indicatives de la quantité d'énergie électrique accumulée pour les au moins deux de la pluralité de premières mesures ToF.

7. Capteur (100, 100', 200) selon l'une des revendications 1 à 6, comprenant en outre : un élément d'éclairage configuré pour émettre une pluralité de séquences d'impulsions lumineuses vers une scène pour l'au moins une de la pluralité de premières mesures ToF, l'élément d'éclairage étant configuré pour interrompre l'émission de lumière dans un intervalle de pause respectif entre des séquences successives de la pluralité de séquences d'impulsions lumineuses.

8. Capteur (100, 100', 200) selon la revendication 7, dans lequel chaque intervalle de pause est plus long que deux fois un temps de propagation d'une impulsion lumineuse depuis le capteur ToF jusqu'à une extrémité distale de la plage de mesure cible du capteur ToF.

9. Capteur ToF (100, 100', 200) selon l'une des revendications 1 à 8, comprenant en outre :
une circuiterie de traitement (130) configurée pour déterminer, sur la base des premières données (121), si un ou plusieurs objets en dehors de la plage de mesure cible du capteur ToF sont présents dans une scène.

10. Capteur ToF (100, 100', 200) selon la revendication 9, dans lequel la circuiterie de traitement (130) est configurée pour déterminer si un ou plusieurs objets en dehors de la plage de mesure cible du capteur ToF sont présents dans la scène en comparant l'énergie électrique accumulée indiquée par les premières données (121) à une valeur seuil.

11. Capteur ToF (100, 100', 200) selon la revendication 9 ou la revendication 10, dans lequel, s'il est déterminé qu'un ou plusieurs objets en dehors de la plage de mesure cible du capteur ToF sont présents dans la scène, la circuiterie de traitement (130) est configurée pour marquer des données de distance indiquant une ou plusieurs distances à un ou plusieurs objets dans la scène comme potentiellement ambiguës, les données de distance étant générées par la circuiterie de traitement (130) sur la base des sorties des pixels de capteur photosensibles d'au moins le premier sous-ensemble pour la pluralité de premières mesures ToF.

12. Capteur ToF (100, 100', 200) selon la revendication 9 ou la revendication 10, dans lequel, s'il est déterminé qu'un ou plusieurs objets en dehors de la plage de mesure cible du capteur ToF sont présents dans la scène, la circuiterie de traitement (130) est configurée pour :

commander le capteur ToF pour effectuer une pluralité de deuxièmes mesures ToF avec une fréquence de modulation différente de celle utilisée pour les premières mesures ToF ; et générer des données de distance indiquant une ou plusieurs distances par rapport à un ou plusieurs objets dans la scène sur la base des sorties des pixels de capteur photosensibles d'au moins le premier sous-ensemble pour la pluralité de premières mesures ToF et la pluralité de deuxièmes mesures ToF.

13. Capteur ToF (100, 100', 200) selon la revendication 9 ou la revendication 10, dans lequel, s'il est déterminé qu'un ou plusieurs objets en dehors de la plage de mesure cible du capteur ToF sont présents dans la scène, la circuiterie de traitement (130) est configurée pour commander le capteur ToF pour effectuer une pluralité de deuxièmes mesures ToF en utilisant une deuxième plage de mesure cible qui s'étend au-delà de la plage de mesure cible du capteur ToF pour la pluralité de premières mesures ToF ; et générer des données de distance indiquant une ou plusieurs distances par rapport à un ou plusieurs objets dans la scène sur la base des sorties des pixels de capteur photosensibles d'au moins le premier sous-ensemble pour la pluralité de deuxièmes mesures ToF.

14. Capteur ToF (200) selon la revendication 3 ou l'une des revendications 12 et 13, dans lequel

la circuiterie de traitement est en outre configurée pour déterminer si un ou plusieurs objets en dehors de la plage de mesure cible du capteur ToF sont présents dans la scène sur la base des deuxièmes données, dans lequel, si les premières données indiquent qu'un ou plusieurs objets en dehors de la plage de mesure cible du capteur ToF sont présents dans la scène et que les deuxièmes données indiquent qu'aucun objet en dehors de la plage de mesure cible du capteur ToF n'est présent dans la scène, la circuiterie de traitement est configurée pour commander le capteur ToF afin d'effectuer la pluralité de deuxièmes mesures ToF en :

commander la circuiterie de lecture du capteur ToF pour lire les pixels de capteur photosensibles du premier sous-ensemble mais pas les pixels de capteur photosensibles du deuxième sous-ensemble pour la pluralité de deuxièmes mesures ToF ; et/ou commander un élément d'éclairage du capteur ToF pour qu'il émette de la lumière vers une première partie de la scène détectée par les pixels de capteur photosensibles du premier sous-ensemble, mais pas vers une deuxième partie de la scène détectée par les pixels de capteur photosensibles du deuxième sous-ensemble.

15. Dispositif électronique (300) comprenant :

un capteur à temps de vol, ToF, (100') selon l'une des revendications 1 à 8 ; et un processeur d'application (150) couplé au capteur ToF (100'), le capteur ToF (100') comprenant en outre une circuiterie d'interface (140) configurée pour émettre les premières données au processeur d'application (150), et le processeur d'application (150) étant configuré pour déterminer, sur la base des premières données (121), si un ou plusieurs objets en dehors de la plage de mesure cible du capteur ToF (100') sont présents dans une scène.

EP 4 148 459 B1

pixel array

111-1~ 110-1 ~101 113-1 114-1 112-1 111-2 ~101 113-2 114-2 110-2 ~112-2

120

~121

130

100

Fig. 1

EP 4 148 459 B1

first subset

second subset

111-1 ~

111-2

~ 101

~ 101

111-m+1

111-m ~

101 ~

~ 101

113-1

113-2

113-m

112-m+1

~ 112-2

~ 110-m+1

110-1

110-2 ~

110-m

113-m+1

112-1

114-1

114-2

112-m

114-m

114-m+1

120

125

~ 121

~ 126

130

**Fig. 2**

<u>200</u>

Fig. 3

difference due to drainage

Correlation with Drain
Correlation without Drain

430

Measurement range

410

420

Correlation

Distance [m]

Fig. 4

Fig. 5

EP 4 148 459 B1

Fig. 6

Fig. 7

802

operating the photo-sensitive sensor
pixels to drain part of
generated charge carriers

804

operating the photo-sensitive sensor pixels
to selectively store another
part of the charge carriers

800

806

operating the common charge storage to
accumulate currents output
by the coupled drain terminals

Fig. 8

Fig. 9

operating the photo-sensitive sensor
pixels to drain part of
generated charge carriers

1002

operating the photo-sensitive sensor pixels
to selectively store another
part of the charge carriers

1004

operating the processing circuitry to
determine whether one or more object is
outside the measurement range

1006

1000

Fig. 10

**EP 4 148 459 B1**

## REFERENCES CITED IN THE DESCRIPTION

### Patent documents cited in the description

- EP 3392647 A1
- US 2012194799 A1